# FASCICULE DE BREVET EUROPEEN

(11) **EP 0 558 381 B1**
(45) Date de publication et mention de la délivrance du brevet: **25.10.1995**
(21) Numéro de dépôt: 93400406.0
(22) Date de dépôt: 18.02.1993
(51) Int. Cl.: F02K 1/70, F02K 1/56

(54) **Inverseur de poussée pour moteur à réaction assurant un guidage du flux dévié**
Schubumkehrvorrichtung für ein Strahltriebwerk, die die Führung des umgeleiteten Strahls sicherstellt
Thrust reverser for a jet engine ensuring the guidance of the deviated jet

(30) Priorité: 26.02.1992 FR 9202230
(43) Date de publication de la demande: 01.09.1993
(73) Titulaire: SOCIETE DE CONSTRUCTION DES AVIONS HUREL-DUBOIS, F-92360 Meudon la Forêt (FR)
(72) Inventeur: Standish, Robert, F-78120 Gazeran (FR)
(74) Mandataire: Sauvage, Renée

(56) Documents cités:
- EP-A- 0 301 955
- EP-A- 0 368 725

## Description

La présente invention concerne un inverseur de poussée pour moteur à réaction du type à portes basculantes. Dans ce type d'inverseur connu, les portes sont conçues pour évoluer entre deux positions, à savoir une position dite "de croisière" dans laquelle elles constituent des éléments de capotage d'un canal d'éjection des gaz permettant une circulation du flux de gaz d'amont en aval, et une position dite "d'inversion de poussée" dans laquelle les portes, après basculement, obturent au moins partiellement le canal d'éjection et dévient le flux de gaz radialement vers l'extérieur et vers l'amont. Plus particulièrement, la présente invention est une amélioration des portes d'inverseur connues dans lesquelles est prévue, afin d'aider à l'inversion du flux et de guider le flux dévié, au moins une paroi déflectrice s'étendant à peu près perpendiculairement à la porte à partir de la face interne de celle-ci, cette paroi déflectrice pouvant être située à l'extrémité amont de la porte et/ou sur les bords latéraux de celle-ci.

On connaît d'après EP-A-0 301 955 des portes d'inverseur du type précité dont la paroi déflectrice comporte une série de passages ayant chacun une entrée et une sortie respectivement sur les faces amont et aval de la paroi déflectrice, vu dans le sens d'écoulement des gaz à travers lesdits passages. Le but de ces passages est d'obtenir un réglage du débit inverse pour compenser l'effet néfaste du prolongement 14 que comporte la paroi déflectrice, effet néfaste qui se manifeste en position d'inversion et qui consiste en une réduction sensible du débit inversé, comme cela est expressément indiqué dans ce document antérieur.

La présente invention a un objectif différent, à savoir proposer une configuration de paroi déflectrice qui assure une meilleure efficacité de l'inversion ainsi qu'un contrôle de la direction du jet dévié.

Dans ce but, l'inverseur selon l'invention est caractérisé par le fait que le centre géométrique de l'entrée desdits passages est décalé par rapport au centre géométrique de la sortie de ceux-ci, de sorte que la ligne joignant lesdits centres géométriques est inclinée par rapport à la perpendiculaire aux faces amont et aval de la paroi déflectrice, dans la zone du passage concerné.

Chaque passage comporte de préférence au moins deux flancs en vis-à-vis et s'étendant dans une direction sensiblement parallèle à la ligne joignant les centres géométriques de l'entrée et de la sortie du passage, de sorte qu'ils sont inclinés par rapport aux faces amont et aval de la paroi déflectrice en assurant ainsi un guidage du flux qui traverse le passage.

De préférence, l'entrée et la sortie de chaque passage ont la forme de fentes oblongues et les flancs inclinés du passage relient les grands côtés ou les petits côtés desdites fentes.

Par ailleurs, afin d'améliorer les caractéristiques aérodynamiques du flux dévié, notamment en éliminant ou réduisant les turbulences au niveau de la paroi déflectrice, les flancs de chaque passage sont raccordés à la face amont de la paroi déflectrice par une zone arrondie.

Les passages peuvent être pratiqués directement dans l'épaisseur de la paroi déflectrice, mais on préfèrera, selon l'invention, les prévoir dans des plaques amovibles rapportées dans des logements ménagés dans la paroi déflectrice. En effet, on peut ainsi disposer d'une série de "grilles" qui peuvent être substituées les unes aux autres en adaptant ainsi facilement la géométrie des passages aux besoins d'orientation de la nappe de gaz déviés. Chaque paroi déflectrice peut être munie de plusieurs plaques amovibles présentant chacune plusieurs passages. Enfin, toujours dans le but d'améliorer les caractéristiques aérodynamiques, les flancs inclinés des passages auront de préférence une configuration courbe.

On décrira à présent l'invention en référence aux dessins annexés, dans lesquels :
- la figure 1 est une vue d'ensemble schématique d'une porte d'inverseur selon l'invention basculée en position d'inversion de jet ;
- les figures 2 et 3 montrent diverses dispositions de parois déflectrices percées de passages ;
- la figure 4 est une coupe à plus grande échelle selon la ligne IV-IV de la figure 2 ;
- la figure 5 est une variante de réalisation montrant les passages pratiqués dans dans plaques amovibles ;
- la figure 6 est une coupe selon la ligne VI-VI de la figure 5 ;
- la figure 7 montre schématiquement une partie d'avion équipé d'inverseurs selon l'invention assurant un guidage des nappes de flux dévié ; et
- la figure 8 représente à échelle agrandie une porte déployée de la figure 7.

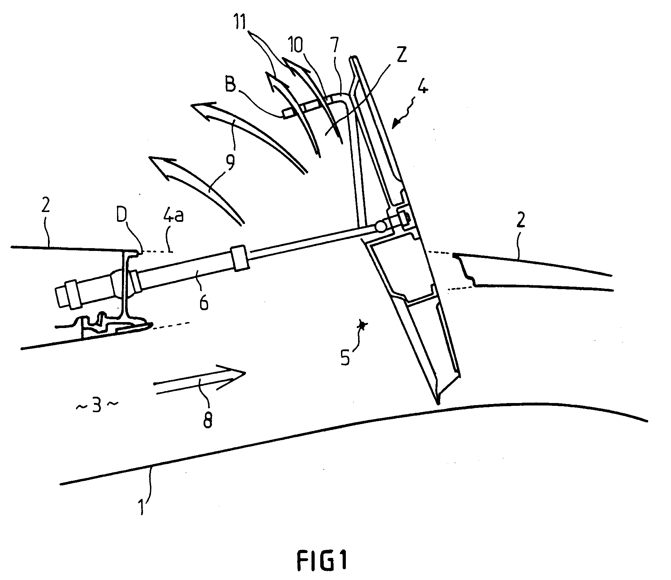

Bien que l'invention puisse être appliquée aux inverseurs à portes équipant tout type de moteur à réaction, l'inverseur représenté à la figure 1 est prévu, sans qu'on puisse y voir une limitation, pour un moteur à double flux de type classique comportant une structure centrale de moteur 1 par laquelle est éjectée une veine principale ou flux chaud, la structure 1 étant entourée d'un capotage co-axial 2 et un canal annulaire 3 séparant la structure 1 du capotage 2 en assurant la circulation d'un flux froid 8 généré, en amont, par une soufflante (non représentée).

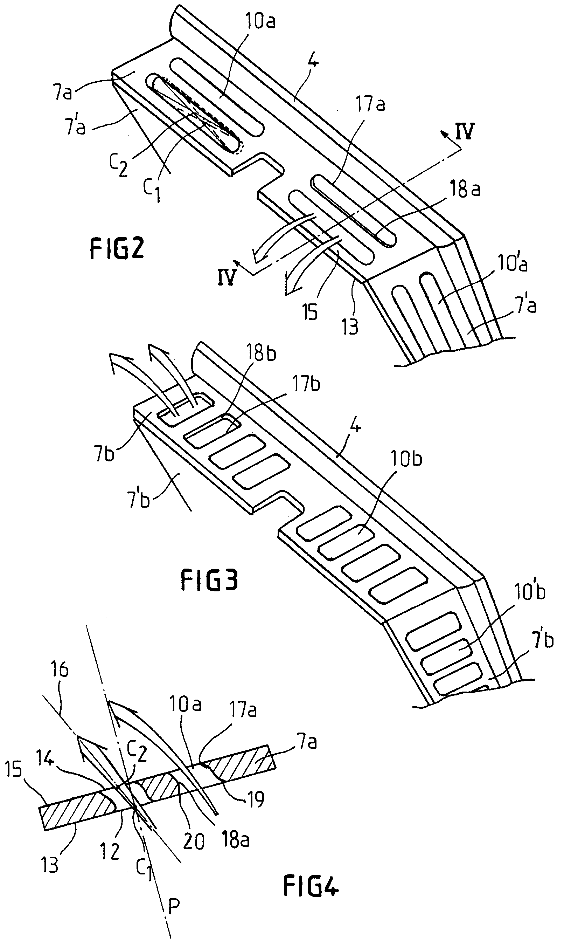

L'inverseur de poussée proprement dit est constitué par plusieurs portes 4 articulées de façon à basculer autour d'un axe 5 sous l'action d'un vérin de commande 6 entre une position dite "de croisière" 4a, partiellement représentée en pointillés, dans laquelle la porte est alignée avec les parties de capotage 2 et libère totalement le canal annulaire 3 et une position dite "d'inversion" représentée en trait plein à la figure 1 et dans laquelle la partie aval de la porte obture le canal 3 tandis que sa partie amont fait saillie à l'extérieur du capotage de façon à dévier le flux 8 radialement vers l'extérieur et vers l'amont comme le montrent les flèches 9. Afin d'aider au guidage du flux inversé, la porte 4 présente au moins une paroi déflectrice frontale 7, à peu près perpendiculaire à la porte, et s'étendant à partir de l'extrémité amont de la face interne de celle-ci. Comme on le voit aux figures 2, 3 et 5, la porte 4 peut aussi présenter des parois déflectrices latérales 7'a, 7'b, 70b.

La paroi déflectrice 7 oblige le flux dévié à s'orienter vers l'amont mais présente le double inconvénient, d'une part, de réduire la faculté pour l'inverseur à conserver les caractéristiques de l'écoulement du flux circulant dans le canal 3 en introduisant un rétrécissement du passage de sortie de flux entre le bord B de la paroi déflectrice et le bord D du capotage et, d'autre part, de provoquer, dans l'espace Z entre la paroi 7 et la face interne de la porte, une zone de turbulence préjudiciable à l'écoulement.

C'est pour accroître le coefficient de débit du flux inversé, réduire les turbulences et faciliter l'écoulement aérodynamique du flux, que l'on prévoit dans la paroi déflectrice 7 des passages 10 par lesquels une partie du flux peut s'écouler selon les flèches 11.

A la figure 2, on a représenté une première forme de réalisation des passages 10a qui ont la forme de fentes allongées dont les grands côtés sont parallèles à la surface de porte 4. Les parois déflectrices latérales 7'a présentent des passages 10'a en forme de fentes dont les grands côtés sont également parallèles à la porte.

A la figure 3, en revanche, les parois frontale 7b et latérales 7'b présentent des fentes allongées 10b et 10'b dont les grands côtés s'étendent perpendiculairement à la surface de porte 4.

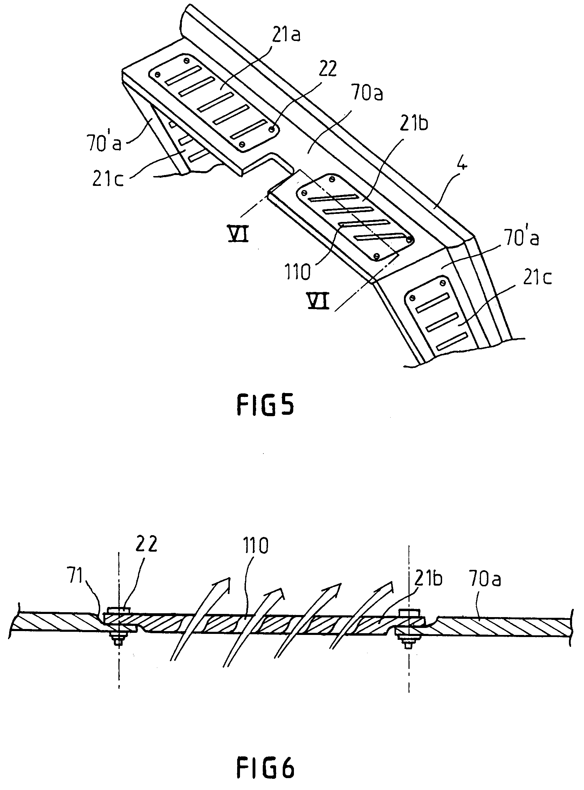

Les fentes 10a, 10'a, 10b et 10'b des figures 2 et 3 sont pratiquées directement dans l'épaisseur des parois déflectrices et ont la configuration représentée sur la coupe de la figure 4. Comme on le voit sur cette figure, chaque passage 10a présente une entrée 12 pratiquée sur la face amont 13 de la paroi 7a et dont on a figuré le centre géométrique en C1. Le passage présente également une sortie 14 pratiquée sur la face aval 15 de la paroi 7a et dont le centre géométrique est figuré en C2. L'entrée 12 et la sortie 14 sont décalées comme le montre la ligne 16, joignant les centres géométriques C1 et C2, qui est inclinée par rapport à la perpendiculaire P aux faces 13 et 15 de la paroi, dans la zone du passage 10a concerné.

Ainsi, la partie du flux dévié traversant les passages 10a est localement orientée selon la ligne 16. De préférence, pour aider au passage aérodynamique du flux, les flancs 17a et 18a en vis-à-vis, dans chaque passage 10a sont courbes, le flanc 17a étant sensiblement concave et le flanc 18a sensiblement convexe, tandis que chaque flanc est raccordé à la face amont 13 de la paroi 7a par des zones arrondies 19 et 20 facilitant le passage du flux. Comme on le voit à la figure 2, les flancs 17a et 18a des fentes sont situés dans la longueur des fentes, ce qui permet de guider le flux dans un plan sensiblement perpendiculaire à la porte.

Au contraire dans le cas de la figure 3, les flancs 17b-18b s'étendent transversalement à la porte 4, ce qui amène à guider le flux à peu près parallèlement au plan de la porte.

On comprend que dans le cas des formes de réalisation des figures 2 et 3, les portes sont conçues pour un mode unique d'usage. Il peut arriver que l'on ait besoin, en fonction des nécessités de guidage de nappe, de disposer d'une plus grande souplesse. Dans un tel cas, on aura intérêt à utiliser le mode de réalisation des figures 5 et 6 dans lequel on emploie des plaques amovibles 21a-c (figure 5) où sont pratiquées des fentes 110. Ces plaques sont rapportées, par exemple par boulonnage en 22, dans des logements 71 prévus à cet effet dans les parois déflectrices frontale 70a ou latérales 70'a.

On notera que selon le cas, on pourrait disposer, sur une même paroi, de plusieurs séries de plaques ayant des passages de configurations différentes et assurant un guidage de flux selon des directions variées, par exemple une plaque 21a ayant des passages allongés dont les grands côtés sont perpendiculaires à la porte 4, comme à la figure 3, et une plaque 21b ayant des passages allongés dont les grands côtés sont obliques par rapport à la porte.

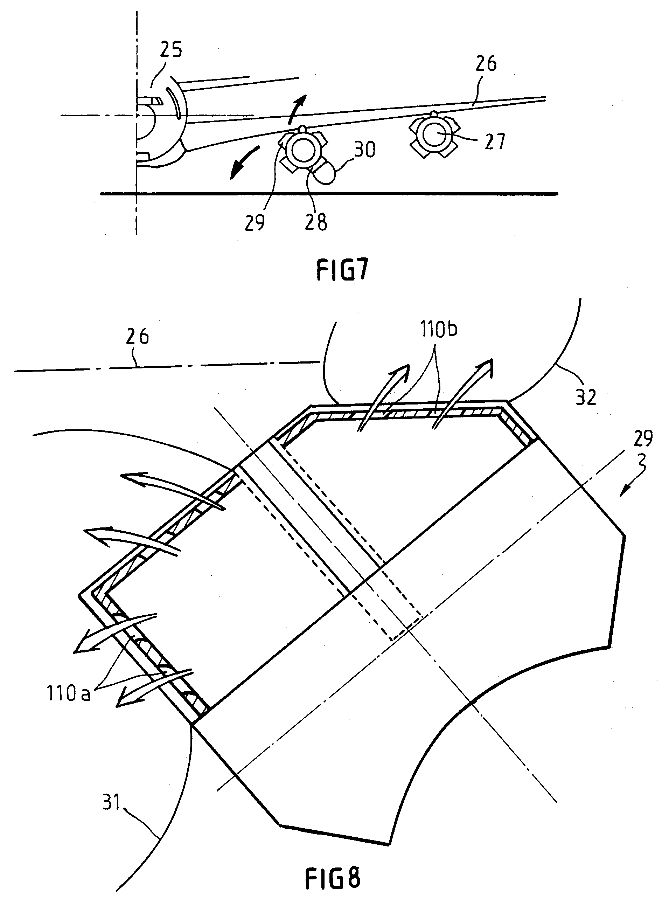

C'est notamment ce que l'on aura intérêt à faire lorsque l'on souhaitera éviter les interférences entre les nappes de flux déviées et les structures d'un avion 25 comme cela est représenté à la figure 7 où l'on voit des moteurs 27 montés sous une aile 26. On a représenté en 28 et 29 deux des portes de l'inverseur en position ouverte. La porte inférieure 28 pourra présenter des passages 10a comme à la figure 2 pour générer une nappe radiale 30 unique. En revanche pour la porte 29 qui se trouve au voisinage de l'aile de l'avion, on aura intérêt à adopter une configuration comme celle de la figure 8 dans laquelle les fentes 110a et 110b généreront respectivement des nappes 31 et 32 de flux inversé orientées latéralement pour éviter de heurter les structures de l'avion.

## Revendications

1. Inverseur de poussée pour moteur à réaction du type à portes basculantes susceptibles d'évoluer entre deux positions, une position dite "de croisière" dans laquelle les portes (4) constituent des éléments de capotage (2) d'un canal (3) d'éjection des gaz permettant une circulation du flux de gaz (8) d'amont en aval, et une position dite "d'inversion" de poussée dans laquelle les portes (4), après basculement, obturent au moins partiellement le canal d'éjection (3) et dévient le flux de gaz (8) radialement vers l'extérieur et vers l'amont, chacune desdites portes (4) comportant au moins une paroi déflectrice (7; 7a, 7'a; 7b, 7'b; 70a, 70'a) s'étendant à peu près perpendiculairement à la porte (4) et destinée à guider le flux dévié (8), ladite paroi déflectrice (7; 7a, 7'a; 7b, 7'b; 70a, 70'a) comportant une série de passages (10; 10a, 10'a; 10b, 10'b; 110; 110a, 110b) ayant chacun une entrée (12) et une sortie (14) respectivement sur les faces amont (13) et aval (15) de la paroi déflectrice (7; 7a, 7'a; 7b, 7'b; 70a, 70'a), vu dans le sens d'écoulement des gaz à travers lesdits passages (10; 10a, 10'a; 10b, 10'b; 110; 110a, 110b), ledit inverseur étant caractérisé en ce que le centre géométrique (C1) de ladite entrée (12) est décalé par rapport au centre géométrique (C2) de ladite sortie (14), la ligne (16) joignant lesdits centres géométriques étant inclinée par rapport à la perpendiculaire (P) aux faces amont et aval (13, 15) de la paroi déflectrice (7; 7a, 7'a; 7b, 7'b; 70a, 70'a), dans la zone du passage (10; 10a, 10'a; 10b, 10'b; 110; 110a, 110b) concerné.

2. Inverseur selon la revendication 1, caractérisé en ce que chaque passage (10; 10a, 10'a; 10b, 10'b; 110; 110a, 110b) comporte au moins deux flancs (17a, 18a; 17b, 18b) en vis-à-vis et s'étendant dans une direction sensiblement parallèle à la ligne (16) joignant les centres géométriques (C1, C2) de l'entrée (12) et de la sortie (14) du passage, de sorte que ces flancs (17a, 18a; 17b, 18b) sont inclinés par rapport aux faces amont et aval (13, 15) de la paroi déflectrice.

3. Inverseur selon la revendication 2, caractérisé en ce que l'entrée (12) et la sortie (14) de chaque passage (10; 10a, 10'a) ont la forme de fentes oblongues, les flancs inclinés (17a, 18a; 17b, 18b) du passage reliant les grands côtés desdites fentes.

4. Inverseur selon la revendication 2, caractérisé en ce que l'entrée (12) et la sortie (14) de chaque passage (10b, 10'b) ont la forme de fentes oblongues, les flancs inclinés du passage reliant les petits côtés desdites fentes.

5. Inverseur selon l'une quelconque des revendications 1 à 4, caractérisé en ce que les flancs (17a, 18a; 17b, 18b) du passage (10; 10a, 10'a; 10b, 10'b; 110; 110a, 110b) sont raccordés à la face amont (13) de paroi déflectrice par une zone arrondie (19, 20).

6. Inverseur selon l'une quelconque des revendications 1 à 5, caractérisé en ce que les passages (10; 10a, 10'a; 10b, 10'b) sont pratiqués directement dans l'épaisseur de la paroi déflectrice (7; 7a, 7'a; 7b, 7'b).

7. Inverseur selon l'une quelconque des revendications 1 à 5, caractérisé en ce que les passages (110) sont pratiqués dans des plaques amovibles (21) rapportées dans des logements (71) ménagés dans la paroi déflectrice (70a, 70'a) afin de permettre une adaptation de la géométrie des passages selon les besoins.

8. Inverseur selon l'une quelconque des revendications 1 à 7, caractérisé en ce que chaque paroi déflectrice (70a, 70'a) est munie de plusieurs plaques amovibles (21a, 21b, 21c) présentant chacune plusieurs passages (110).

9. Inverseur selon l'une quelconque des revendications 1 à 8, caractérisé en ce que les flancs inclinés (17a, 18a; 17b, 18b) des passages (10; 10a, 10'a; 10b, 10'b; 110; 110a, 110b) présentent une configuration courbe.

## Claims

1. A thrust reverser for a jet engine of the swing-door type capable of changing between two positions, a so-called "cruise" position in which the doors (4) constitute cowling elements (2) of a jet pipe (3) allowing throughput of the gas flow (8) from upstream to downstream, and a so-called "thrust reversal" position in which the doors (4), after tilting, at least partially block the jet pipe (3) and deflect the gas flow (8) radially outwards and upstream, each of said doors (4) comprising at least one deflecting wall (7 ; 7a, 7'a ; 7b, 7'b ; 70a, 70'a) extending approximately perpendicularly to the door (4) and intended to guide the deflected flow (8), said deflecting wall (7 ; 7a, 7'a ; 7b, 7'b ; 70a, 70'a) comprising a series of passages (10 ; 10a, 10'a ; 10b, 10'b ; 110 ; 110a, 110b) each having an inlet (12) and an outlet (14) on the upstream (13) and downstream (15) faces of the deflecting wall (7 ; 7a, 7'a ; 7b, 7'b ; 70a, 70'a) respectively, seen in the direction of flow of the gases through said passages (10 ; 10a, 10'a ; 10b, 10'b ; 110 ; 110a, 110b), in which reverser the geometric center (C1) of said inlet (12) is offset with respect to the geometric center (C2) of said outlet (14), the line (16) joining said geometric centers being inclined with respect to the perpendicular (P) to the upstream and downstream faces (13, 15) of the deflecting wall (7 ; 7a, 7'a ; 7b, 7'b ; 70a, 70'a), in the zone of the passage (10 ; 10a, 10'a ; 10b, 10'b ; 110 ; 110a, 110b) in question.

2. The reverser as claimed in claim 1, wherein each passage (10 ; 10a, 10'a ; 10b, 10'b ; 110 ; 110a, 110b) comprises at least two facing flanks (17a, 18a ; 17b, 18b) extending in a direction substantially parallel to the line (16) joining the geometric centers (C1, C2) of the inlet (12) and of the outlet (14) of the passage, so that these flanks (17a, 18a ; 17b, 18b) are inclined with respect to the upstream and downstream faces (13, 15) of the deflecting wall.

3. The reverser as claimed in claim 2, wherein the inlet (12) and the outlet (14) of each passage (10 ; 10a, 10'a) have the shape of oblong slits, the inclined flanks (17a, 18a ; 17b, 18b) of the passage connecting the long sides of said slits.

4. The reverser as claimed in claim 2, wherein the inlet (12) and the outlet (14) of each passage (10b, 10'b) have the shape of oblong slits, the inclined flanks of the passage connecting the short sides of said slits.

5. The reverser as claimed in anyone of claims 1 to 4, wherein the flanks (17a, 18a ; 17b, 18b) of the passage (10 ; 10a, 10'a ; 10b, 10'b ; 110 ; 110a, 110b) are connected to the deflecting wall upstream face (13) by a rounded zone (19, 20).

6. The reverser as claimed in anyone of claims 1 to 5, wherein the passages (10 ; 10a, 10'a ; 10b, 10'b) are made directly in the thickness of the deflecting wall (7 ; 7a, 7'a ; 7b, 7'b ).

7. The reverser as claimed in anyone of claims 1 to 5, wherein the passages (110) are made in removable plates (21) attached in housings (71) made in the deflecting wall (70a, 70'a) in order to allow the geometry of the passages to be modified as required.

8. The reverser as claimed in anyone of claims 1 to 7, wherein each deflecting wall (70a, 70'a) is fitted with a plurality of removable plates (21a, 21b, 21c) each having a plurality of passages (110).

9. The reverser as claimed in anyone of claims 1 to 8, wherein the inclined flanks (17a, 18a ; 17b, 18b) of the passages (10 ; 10a, 10'a ; 10b, 10'b ; 110 ; 110a, 110b) have a curved configuration.

## Patentansprüche

1. Schubumkehrvorrichtung für Strahltriebwerk mit schwenkbaren Klappen, die sich zwischen zwei Stellungen, einer sogenannten Fahrtstellung, in der die Klappen (4) Elemente der Verkleidung (2) eines Gasausstoßkanals (3) bilden, der eine Strömung des Gasstroms (8) von vorne nach hinten gestattet, und einer sogenannten Schubumkehrstellung, in der die Klappen (4) nach dem Schwenken den Ausstoßkanal (3) mindestens teilweise verschließen und der Gasstrom (8) radial nach außen und nach vorne wird, wobei jede dieser Klappen (4) mindestens eine Deflektorwand (7; 7a, 7'a; 7b, 7'b; 70a, 70'a) aufweist, die sich etwa senkrecht zur Klappe (4) erstreckt und dazu bestimmt ist, den abgelenkten Strom (8) zu lenken, wobei diese Deflektorwand (7; 7a, 7'a; 7b, 7'b; 70a, 70'a) eine Reihe von Durchgängen (10; 10a, 10'a; 10b, 10'b; 110; 110a, 110b) aufweist, die jeweils, in Richtung der Strömung der Gase durch diese Durchgänge (10; 10a, 10'a; 10b, 10'b; 110; 110a, 110b) gesehen, einen Eintritt (12) und einen Austritt (14) auf der vorderen (13) bzw. hinteren (15) Seite dieser Deflektorwand (7; 7a, 7'a; 7b, 7'b; 70a, 70'a) haben, wobei diese Umkehrvorrichtung dadurch gekennzeichnet ist, daß der geometrische Mittelpunkt (C1) dieses Eintritts (12) gegen den geometrischen Mittelpunkt (C2) dieses Austritts (14) versetzt ist, wobei die diese geometrischen Mittelpunkte verbindende Linie (16) gegen die Senkrechte (P) auf die vordere und hintere Seite (13, 15) der Deflektorwand (7; 7a, 7'a; 7b, 7'b; 70a, 70'a) in dem Bereich des betreffenden Durchgangs (10; 10a, 10'a; 10b, 10'b; 110; 110a, 110b) geneigt ist.

2. Umkehrvorrichtung nach Anspruch 1, dadurch gekennzeichnet, daß jeder Durchgang (10; 10a, 10'a; 10b, 10'b; 110; 110a, 110b) mindestens zwei einander gegenüberstehende Flanken (17a, 18a; 17b, 18b) aufweist, die sich in einer Richtung erstrecken, die zu der die geometrischen Mittelpunkte (C1, C2) des Eintritts (12) und des Austritts (14) des Durchgangs verbindenden Linie (16) im wesentlichen parallel ist, so daß die Flanken (17a, 18a; 17b, 18b) gegen die vordere und hintere Seite (13, 15) der Deflektorwand geneigt sind.

3. Umkehrvorrichtung nach Anspruch 2, dadurch gekennzeichnet, daß der Eintritt (12) und der Austritt (14) jedes Durchgangs (10; 10a, 10'a) die Form von länglichen Schlitzen haben, wobei die geneigten Flanken (17a, 18a; 17b, 18b) des Durchgangs die großen Seiten dieser Schlitze verbinden.

4. Umkehrvorrichtung nach Anspruch 2, dadurch gekennzeichnet, daß der Eintritt (12) und der Austritt (14) jedes Durchgangs (10b, 10') die Form von länglichen Schlitzen haben, wobei die geneigten Flanken des Durchgangs die kleinen Seiten dieser Schlitze verbinden.

5. Umkehrvorrichtung nach einem der Ansprüche 1 bis 4, dadurch gekennzeichnet, daß die Flanken (17a, 18a; 17b, 18b) des Durchgangs (10; 10a, 10'a; 10b, 10'b; 110; 110a, 110b) an die vordere Seite (13) der Deflektorwand durch einen abgerundeten Bereich (19, 20) angeschlossen sind.

6. Umkehrvorrichtung nach einem der Ansprüche 1 bis 5, dadurch gekennzeichnet, daß die Durchgänge (10; 10a, 10'a; 10b, 10'b) direkt in der Dicke der Deflektorwand (7; 7a, 7'a; 7b, 7'b) vorgesehen sind.

7. Umkehrvorrichtung nach einem der Ansprüche 1 bis 5, dadurch gekennzeichnet, daß die Durchgänge (110) in abnehmbaren Platten (21) vorgesehen sind, die in in der Deflektorwand (70a, 70'a) vorgesehenen Aufnahmen (71) angebracht sind, um eine Anpassung der Form der Durchgänge an die Bedürfnisse zu gestatten.

8. Umkehrvorrichtung nach einem der Ansprüche 1 bis 7, dadurch gekennzeichnet, daß jede Deflektorwand (70a, 70'a) mit mehreren ahnehmbaren Platten (21a, 21b, 21c) versehen ist, die jeweils mehrere Durchgänge (110) aufweisen.

9. Umkehrvorrichtung nach einem der Ansprüche 1 bis 8, dadurch gekennzeichnet, daß die geneigten Flanken (17a, 18a; 17b, 18b) der Durchgänge (10; 10a, 10'a; 10b, 10'b; 110; 110a, 110b) eine gekrümmte Konfiguration besitzen.
